# EUROPEAN PATENT SPECIFICATION

(11) **EP 4 420 534 B1**
(45) Date of publication and mention of the grant of the patent: **18.11.2026**
(21) Application number: 22883334.9
(22) Date of filing: 03.10.2022
(51) Int. Cl.: A24B 15/34, A24B 13/00, A24B 15/28, A23G 3/00

(54) **SMOKELESS TOBACCO PRODUCT FOR ORAL USE AND SOFT CAPSULE USED THEREIN**
RAUCHLOSES TABAKPRODUKT ZUR ORALEN VERWENDUNG UND DARIN VERWENDETE WEICHKAPSEL
PRODUIT DE TABAC SANS FUMÉE À USAGE ORAL ET CAPSULE MOLLE UTILISÉE DANS CELUI-CI

(30) Priority: 20.10.2021 JP 2021171699
(43) Date of publication of application: 28.08.2024
(73) Proprietor: Sunsho Pharmaceutical Co., Ltd., Fuji-shi, Shizuoka 419-0201 (JP)
(72) Inventor: TOYOTA, Kohei, Fuji-shi, Shizuoka 419-0201 (JP); YAMADA, Kazuya, Fuji-shi, Shizuoka 419-0201 (JP); ITO, Masakazu, Fuji-shi, Shizuoka 419-0201 (JP); SUZUKI, Tomoya, Fuji-shi, Shizuoka 419-0201 (JP)
(74) Representative: Bird & Bird LLP
(86) International application number: PCT/JP2022/036967
(87) International publication number: WO 2023/068028

(56) References cited:
- EP-B1- 2 749 272
- WO-A1-2021/070644
- WO-A1-2021/070644
- WO-A1-2021/201059
- JP-A- 2009 073 830
- JP-A- 2012 526 553
- JP-A- 2013 071 934
- JP-A- 2020 115 848
- JP-A- 2020 115 848
- JP-A- 2021 121 598

## Description

### Technical Field

The present invention relates to a soft capsule used in smokeless tobacco products for oral use, and a smokeless tobacco product for oral use, comprising the same.

### Background Art

Tobacco may be enjoyed in a so-called "smokeless" form. A typical smokeless tobacco product is utilized by inserting a processed tobacco or a tobacco-containing compound into the user's mouth. There are various types of smokeless tobacco products for oral use, including chewing tobacco, wet smokeless tobacco, snus, and dry snuff. Chewing tobacco means coarsely chopped tobacco leaves, and is typically packaged in a large pouch-like package, and either a piece thereof or a twisted product thereof is used. Wet smokeless tobacco is a moist, more finely chopped tobacco, which is provided in a loosened form or a pouch form. The wet smokeless tobacco is used by placing a pinch thereof or a pouch thereof between the cheek and gums of an adult tobacco consumer. Snus is a heat-treated smokeless tobacco. Dried snuff is a finely ground tobacco that is placed in the mouth or is used through the nose. Various types of smokeless tobacco products have been researched and developed (for example, Patent Literature 1).

### Citation List

### Patent Literature

Patent Literature 1: International Publication WO2009/015142 Patent document JP2020115848A discloses a collapsible seamless capsule included in a filter and a smoking device.

### Summary of Invention

### Technical Problem

It is desired to develop a novel form of smokeless tobacco product that can be enjoyed for its taste and flavor.

### Solution to Problem

The present invention includes the following embodiments.
[1] A soft capsule used in smokeless tobacco products for oral use,
   the soft capsule comprising a capsule film and a content encapsulated by the capsule film, wherein
   the fracture hardness is 20 N or more and 200 N or less, and
   the disintegration time is less than 5 minutes as measured by the disintegration test method specified in the Japanese Pharmacopoeia.
[2] The capsule according to the above [1], wherein the fracture energy is 25 N·mm or more.
[3] The capsule according to the above [1] or [2], wherein the diameter of the capsule is in the range of 2 to 6.5 mm.
[4] The capsule according to any one of the above [1] to [3], wherein the film percentage is 7% to 25% by weight.
[5] The capsule according to any one of the above [1] to [4], wherein the distortion percentage is 50% or more and 100% or less.
[6] The capsule according to any one of the above [1] to [5], wherein the fracture hardness per fracture distance is 4 N/mm or more and 20 N/mm or less.
[7] The capsule according to any one of the above [1] to [6], wherein the fracture hardness per capsule diameter is 9 N/mm or more and 20 N/mm or less.
[8] The capsule according to any one of the above [1] to [6], wherein the capsule film comprises at least one type selected from gelatin and polysaccharides.
[9] The capsule according to the above [8], wherein
   the gelatin comprises at least one type selected from the group consisting of pork-derived gelatin, bovine-derived gelatin, and fish-derived gelatin, and
   the polysaccharides comprise at least one type selected from the group consisting of galactomannan, agar, carrageenan, and alginic acid or a salt thereof.
[10] The capsule according to any one of the above [1] to [9], wherein the capsule film further comprises at least one type of plasticizer selected from the group consisting of polyhydric alcohols, monosaccharides, disaccharides, oligosaccharides, sugar alcohols, starch, starch derivatives, cellulose derivatives, polyvinyl alcohol, and triacetin.
[11] The capsule according to any one of the above [1] to [10], wherein the content comprises a flavor.
[12] The capsule according to any one of the above [1] to [11], wherein the content comprises caryophyllene.
[13] The capsule according to any one of the above [1] to [12], wherein the thickness of the capsule film is 50 to 120 µm.
[14] A smokeless tobacco product for oral use, comprising the capsule according to any one of the above [1] to [13].

### Advantageous Effects of Invention

According to one aspect of the present invention, provided is a soft capsule having an excellent disintegration property and a good fracture hardness, which can be used in smokeless tobacco products for oral use. According to several preferred aspects, the present soft capsule can provide good chewability (cracking sensation) in the oral cavity, and the taste and aroma of a content such as a flavor encapsulated in the capsule. Furthermore, since the capsule film of the present soft capsule is promptly disintegrated in the oral cavity, the foreign-body sensation can be reduced or eliminated.

### Description of Embodiments

Hereafter, the embodiments of the present invention will be described in detail. It is to be noted that the present invention is not limited to the following embodiments, but may be carried out by being arbitrarily modified within the range not departing from the gist thereof. With regard to the matters indicated with numerical ranges, if there are several numerical ranges, the lower limit value and the upper limit value thereof can be selectively combined with each other to form a preferred embodiment. In the present description, when the numerical range "XX to YY" is given, it means "XX or more and YY or less."

In addition, the numerical range of the lower limit value and the upper limit value can be specified by appropriately selecting them from the options and arbitrarily combining them in the specification of the upper limit value and the lower limit value described herein. Furthermore, multiple requirements from various requirements described as preferred aspects in the present description can be combined with one another.

### 1. Capsule

One embodiment of the present invention relates to a soft capsule used in smokeless tobacco products for oral use (hereinafter simply referred to as a "capsule" at times). The capsule of the present embodiment comprises a capsule film and a content encapsulated by the capsule film. The capsule of the present embodiment is configured to have a core comprising a content and a shell that is a capsule film.

The capsule of the present embodiment may be a seamless capsule (a capsule with no seams). In several embodiments, the capsule of the present embodiment is a seamless capsule having a capsule, a core comprising a content, and a shell that is a capsule film. The seamless capsule is produced by a dripping method.

The capsule of the present embodiment may be a rotary capsule. The rotary capsule is a capsule produced by a rotary-type production method, in which a mold called a die roll is used to a crimping and molding process for capsules.

The shape of the capsule is not particularly limited, and it may be, for example, a spherical capsule (e.g., true sphere, etc.), or may also be a football-shaped capsule.

Conventionally, several capsules have been developed, in which a capsule encapsulating a flavor or the like therein is embedded in a tobacco filter, and the aroma of a capsule content and the plosive sound and feeling of the capsule can be enjoyed by breaking the capsule when smoking or other occasions. When these capsules were used in smokeless tobacco products, the capsules were problematic in that the capsule film had poor solubility, and in that the residue of the film caused foreign-body sensation upon the use. In addition, since most of the capsules used in filter-type tobaccos are crushed by fingers, when the capsules were chewed in the oral cavity, the capsules were problematic in that they had poor cracking sensation or were not broken well.

Since the capsule of the present embodiment has an excellent disintegration property and a good fracture hardness, these problems are overcome, and good chewability (cracking sensation) in the oral cavity and the taste and aroma of a content such as a flavor encapsulated in the capsule can be enjoyed.

### < Physical properties of capsule >

The capsule of the present embodiment has a disintegration time of less than 5 minutes as measured by the disintegration test method specified in the Japanese Pharmacopoeia (hereinafter simply referred to as a "disintegration time" at times). In the present description, the term "disintegration time" refers to the time required for complete disintegration of a capsule, when a test is carried out using water (liquid temperature: 37±2°C) in the disintegration test method specified in the 18th revised Japanese Pharmacopoeia. In the present description, the term "complete disintegration" means that the residue of the capsule is completely dissolved and cannot be seen. When the disintegration time is less than 5 minutes, the capsule has an excellent water disintegration property, and the capsule film is quickly disintegrated in the oral cavity. Thus, when a chewing tobacco product is used, foreign-body sensation caused by the residue of the capsule film can be reduced or eliminated.

The disintegration time of the capsule is preferably 4 minutes or less, more preferably 3 minutes or less, and further preferably 2 minutes or less. The lower limit of the disintegration time of the capsule is not particularly limited, and a shorter disintegration time is preferable. The low limit of the disintegration time may be, for example, 10 seconds or more, or 30 seconds or more.

The disintegration time of the capsule may be adjusted within the range of the present invention by adjusting the film formulation and the film thickness. For example, the solubility (short disintegration time) of the capsule can be improved by using highly soluble polysaccharides such as gelatin, carrageenan, and gellan gum in the film. The solubility (short disintegration time) of the capsule can also be improved by reducing the film thickness.

The capsule of the present embodiment has a fracture hardness of 20 N or more and 200 N or less. In the present description, the term "fracture hardness (AV)" refers to the maximum load (unit: N) at the moment of capsule destruction. When the fracture hardness is 20 N or more, good chewable sensation in the oral cavity can be enjoyed. It also prevents damage to the capsule during capsule filling and capsule transportation. If the fracture hardness of the capsule exceeds 200 N, the capsule is too hard to be broken, and it may be difficult to break the capsule by chewing in the oral cavity in some cases. In terms of chewable sensation and ease of fracture, the fracture hardness of the capsule is preferably 25 N or more, more preferably 30 N or more, further preferably 34 N or more, and still further preferably 40 N or more. On the other hand, the fracture hardness of the capsule is preferably 100 N or less, more preferably 80 N or less, further preferably 75 N or less, and still further preferably 71 N or less. In several embodiments, the fracture hardness of the capsule is, for example, in the range of 25 to 100 N, 30 to 80 N, 34 to 71 N, , 40 to 75 N, 34 to 71 N, or 40 to 71 N.

In the present description, the fracture hardness is measured by continuously applying a load in the vertical direction to the capsule particles until they disintegrate. Specifically, the fracture hardness is measured by the method described in the Examples below.

In several embodiments, the fracture hardness per fracture distance (AV/L) of the capsule is 4 N/mm or more and 20 N/mm or less. In the present description, "the fracture hardness per fracture distance" is calculated by dividing the fracture hardness (AV) of the capsule by the fracture distance (L) (mm). In the present description, "the fracture hardness per fracture distance" is also called the "hardness" of the capsule. In a case where the fracture distance is large even if the fracture hardness is large, it is assumed that the hardness value of the capsule may be low and the capsule may be easily destructed in some cases. Therefore, such a hardness (the fracture hardness (AV) per fracture distance (L)) (AV/L) becomes one of indicators that reflect the substantial ease of fracture of the capsule. If the AV/L value is 4 N/mm or more, the capsule can be destructed by chewing in the oral cavity. If the AV/L value is 20 N/mm or less, the capsule can be easily destructed by chewing in the oral cavity. Moreover, from the viewpoint of obtaining good chewable sensation, the fracture hardness per fracture distance (AV/L) is more preferably 9 N/mm or more, further preferably 10 N/mm or more, even further preferably 11 N/mm or more, and still further preferably 12 N/mm or more. On the other hand, the fracture hardness per fracture distance (AV/L) is more preferably 19 N/mm or less, further preferably 18 N/mm or less, and still further preferably 17 N/mm or less. In several embodiments, the fracture hardness per fracture distance (AV/L) is in the range of, for example, 9 to 20 N/mm, or 10 to 19 N/mm, 11 to 17 N/mm, 12 to 18 N/mm, or 12 to 17 N/mm.

In the present description, the term "fracture distance (L)" means the distance that the capsule is deformed before it is destructed (the distance that the capsule is pushed into a rheometer before it is destructed), when the capsule particles are destructed by continuously applying a load in the vertical direction to the capsule particles. In the present description, the fracture distance (L) is measured by the method described in the Examples below.

In several embodiments, the fracture distance (L) of the capsule is not particularly limited, and it may be, for example, 0.1 mm or more, 0.2 mm or more, 0.5 mm or more, 1.0 mm or more, 2.0 mm or more, 3.0 mm or more, or the like, although it depends on the diameter of the capsule, etc. The upper limit value of the fracture distance of the capsule is not particularly limited, and it may be, for example, 10 mm or less, 9 mm or less, 8 mm or less, 7 mm or less, 6 mm or less, or the like. In several embodiments, the fracture distance (L) of the capsule may be in the range of 0.1 to 10 mm, in the range of 0.2 to 9 mm, or in the range of 0.5 to 8 mm, 1.0 to 8 mm, 2.0 to 7 mm, or 3.0 to 6 mm.

In several embodiments, the fracture energy of the capsule is 25 N·mm or more. In the present description, the "fracture energy" is calculated from the fracture hardness (AV) and fracture distance (L) of the capsule according to the following equation:$Fracture energy = fracture hardness \left(AV\right) \times fracture distance \left(L\right) / 2 .$

The fracture energy indicates the amount of energy required to destruct the capsule, and becomes one of indicators that reflect the chewable sensation of the capsule. If the fracture energy is 25 N·mm or more, good chewable sensation in the oral cavity can be enjoyed. The fracture energy of the capsule is more preferably 30 N·mm or more, further preferably 35 N·mm or more, even further preferably 40 N·mm or more, still further preferably 45 N·mm or more, and particularly preferably 50 N·mm or more. The upper limit of the fracture energy of the capsule is not particularly limited, and for example, it is preferably 160 N·mm or less, more preferably 150 N·mm or less, further preferably 140 N·mm or less, still further preferably 130 N·mm or less, and particularly preferably 120 N·mm or less.

The diameter (D) (mm) of the capsule is not particularly limited, and it may be determined depending on the structure, size, etc. of a chewing tobacco product, in which the capsule is used. The diameter (D) of the capsule is for example 2 to 6.5mm, and preferably 2 to 5mm. In several embodiments, the diameter (D) (mm) of the capsule is 2 to 4mm. In several embodiments, the diameter (D) (mm) of the capsule is 3 to 5mm.

In the present description, the diameter of the capsule is measured by the method described in the Examples below.

In several embodiments, the fracture hardness per capsule diameter is 4 N/mm or more and 20 N/mm or less. In the present description, "the fracture hardness per capsule diameter" is calculated by dividing the fracture hardness (AV) by the diameter (D) (mm) of the capsule. There may be a case where the diameter of the capsule is large and the capsule is easily destructed, even if the fracture hardness is large. Therefore, such a ratio (AV/D) between the fracture hardness (AD) and the capsule diameter (D) becomes one of indicators that reflect the substantial destructibility of the capsule. If the AV/D value is 4 N/mm or more, good chewable sensation in the oral cavity can be enjoyed. If the AV/D value is 20 N/mm or less, the capsule can be easily destructed by chewing in the oral cavity. The fracture hardness per capsule diameter (AV/D) is more preferably 6 N/mm or more, further preferably 8 N/mm or more, still further preferably 9 N/mm or more, and particularly preferably 10 N/mm or more. On the other hand, the fracture hardness per capsule diameter (AV/D) is more preferably 19 N/mm or less, further preferably 18 N/mm or less, still further preferably 17 N/mm or less, and particularly preferably 16 N/mm or less. In several embodiments, the fracture hardness per capsule diameter (AV/D) is 9 to 20 N/mm. In some embodiments, the fracture hardness per capsule diameter (AV/D) is 10 to 20 N/mm, 10 to 19 N/mm, 10 to 18 N/mm, 10 to 17 N/mm, or 10 to 16 N/mm.

In several embodiments, the distortion percentage of the capsule is 50% or more and 100% or less. In the present description, the "distortion percentage" is calculated according to the following equation: 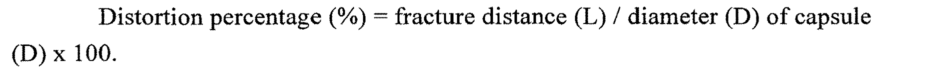 Distortion percentage (%) = fracture distance (L) / diameter (D) of capsule (D) × 100.

It is said that the distortion percentage is an indicator that reflects the degree of elasticity of the capsule (the ease of deformation until the capsule is destructed). If the distortion percentage is 50% or more, the deformation required before the capsule is broken is large and the chewability is favorable. If the distortion percentage is 100% or less, the capsule can be easily destructed by chewing. The distortion percentage is more preferably 55% or more, and further preferably 60% or more. On the other hand, the distortion percentage is more preferably 80% or less, further preferably 75% or less, and particularly preferably 71% or less. In several embodiments, the distortion percentage is in the range of 50% to 80%, 50% to 75%, 55% to 75%, 60% to 75%, or 60% to 71%.

By controlling at least one of the composition of a capsule film, such as film percentage, film thickness, the weight percentage of a gelling agent in the film, and the weight percentage of a plasticizer in the film, the diameter (D), fracture distance (L), fracture hardness (AV), fracture hardness per capsule diameter, hardness, and distortion percentage of the present capsule can be adjusted to be within the scope of the present invention.

For example, the capsule diameter (D) tends to increase, when the capsule content weight or film weight is increased.

For example, the fracture distance (L) tends to increase, when the weight percentage of a plasticizer in the film is increased.

For example, the fracture hardness (AV) tends to increase, when the film percentage, or the weight percentage of a gelling agent in the film is increased.

For example, the fracture hardness per capsule diameter tends to increase, when the film thickness is increased.

For example, the hardness tends to increase, when the weight percentage of a gelling agent in the film is increased.

For example, the distortion percentage tends to increase, when the weight percentage of a plasticizer in the film is increased.

There seems to be a trade-off relationship between the fracture hardness, fracture energy and hardness of the capsule, and the disintegration time. However, in the present invention, for example, by appropriately selecting the composition, film percentage and film thickness of the capsule film, unexpectedly, a capsule that can achieve both of them can be efficiently obtained.

The film percentage of the capsule is not particularly limited, and from the viewpoint of chewability (cracking sensation) and a disintegration property in the oral cavity, the film percentage of the capsule is preferably 7 to 25% by weight. If the film percentage of the capsule is 25% by weight or less, a disintegration property in the oral cavity can be improved. If the film percentage of the capsule is 7% by weight or more, hardness against disintegration increases, and the capsule is excellent in terms of chewability (cracking sensation). The film percentage of the capsule is for example, 7% to 20% by weight, 7% to 15% by weight, 7% to 10% by weight, or 8% to 15% by weight. In the present description, the film percentage (% by weight) means the percentage of the weight of the capsule film (% by weight) when the weight of the entire capsule is set to be 100% by weight.

The thickness of the capsule film can be appropriately specified according to the size or intended use of the capsule. On the other hand, from the viewpoint of simultaneously easily achieving the two performances, namely, chewability (cracking sensation) and a disintegration property in the oral cavity, the thickness of the capsule film is preferably 50 to 120 µm, more preferably 60 to 100 µm, further preferably 65 to 90 µm, still further preferably 65 to 85 µm, and particularly preferably 65 to 75 µm. The thickness of the capsule film is measured by the method described in the Examples below.

### < Capsule film >

The capsule film (hereinafter also referred to as a "film") generally comprises film-forming components (film-forming bases and film-forming agents). Examples of such film-forming components may include polysaccharides (or derivatives thereof) {for example, seaweed-derived polysaccharides [e.g., agar, carrageenan, alginic acid or a salt thereof (e.g., alkali metal salts (sodium salts, potassium salts, etc.), alkaline earth metal salts (calcium salt, magnesium salt, etc.), iron salts, tin salts, and other metal salts), furcelleran, curdlan, etc.], resin-derived polysaccharides (e.g., ghatti gum, gum Arabic, etc.), microorganism-derived polysaccharides (e.g., pullulan, welan gum, xanthan gum, gellan gum, etc.), plant-derived polysaccharides (e.g., tragacanth gum, pectin, glucomannan, starch, polydextrose, dextrin, maltodextrin, cyclodextrin, indigestible tragacanth gum, etc.), seed-derived polysaccharides [e.g., guar gum or a derivative thereof (e.g. hydroxypropyl guar gum, cationic guar gum, guar gum degradation products (guar gum enzyme degradation products, etc.), etc.), tara gum, tamarind seed gum, locust bean gum, psyllium seed gum, linseed gum, etc.], fermented polysaccharides (e.g., diutan gum, etc.), cellulose derivatives (e.g., hydroxypropyl cellulose, hydroxypropyl methyl cellulose, methyl cellulose, carboxymethyl cellulose, etc.), chitosan, etc.}; and synthetic resins (polyvinyl alcohol, etc.), proteins (e.g., gelatin, casein, zein, etc.), and sugar alcohols (e.g., sorbitol, maltitol, lactitol, palatinit, xylitol, mannitol, galactitol, and erythritol).

The film-forming components may be used alone or in combination of two or more types.

In several embodiments, the capsule film comprises at least one type selected from gelatin and polysaccharides.

In several embodiments, the capsule film comprises gelatin. A gelatin-containing films tends to have a more excellent disintegration property in the oral cavity, while maintaining the strength as a capsule. In some embodiments, the gelatin includes at least one type selected from the group consisting of pork-derived gelatin, bovine-derived gelatin, and fish-derived gelatin. In addition, as such gelatin, acid-treated gelatin and alkali-treated gelatin, which are classified according to their production methods, can also be used. These types of gelatin may be used alone as a single type, or in combination of two or more types. A commercially available product can be used as such gelatin.

The content of gelatin in 100% by weight of the capsule film is preferably 60% by weight or more. If the gelatin content is 60% by weight or more, the disintegration property of the capsule can be further enhanced. From the viewpoint of heat resistance, the gelatin content is more preferably 65% by weight or more, and further preferably 70% by weight or more, and it may also be 75% by weight or more. From the viewpoint of maintaining the strength as a capsule and having a more excellent disintegration property in the oral cavity, the content of gelatin in 100% by weight of the capsule film is preferably be 95% by weight or less, and more preferably 90% by weight or less.

In several embodiments, the capsule film comprises polysaccharides. In some embodiments, the polysaccharides include at least one type selected from the group consisting of galactomannan, agar, carrageenan, and alginic acid or a salt thereof. These polysaccharides tend to form tough gel and function as gelling agents. By comprising these polysaccharides, the capsule film is excellent in terms of fracture hardness and fracture energy.

The content of polysaccharides in 100% by weight of the capsule film is preferably 60% by weight or more, and more preferably 75% by weight or more. On the other hand, the content of polysaccharides in 100% by weight of the capsule film is preferably 95% by weight or less, and more preferably 90% by weight or less.

In several embodiments, the capsule film contains galactomannan. Such a form is excellent in terms of a disintegration property in the oral cavity. In some embodiments, the capsule film contains galactomannan and gelatin. Such a form is excellent in terms of a disintegration property in the oral cavity.

Galactomannan is a compound in which galactose (a-D-galactopyranose) binds to a linear main chain consisting of mannose (β-(1-4)-D-mannopyranose) via an α-(1-6) bond. The above-described galactomannan is a compound derived from plants or bacteria. In the present embodiment, galactomannan is preferably a seed-derived polysaccharide. The seed-derived polysaccharide is preferably at least one type selected from the group consisting of guar gum, psyllium seed gum, linseed gum, tamarind seed gum, tara gum, locust bean gum (carob bean gum), fenugreek gum (koloha gum), and degradation products thereof. From the viewpoint of the capsule film having a more excellent disintegration property in the oral cavity, the capsule film more preferably comprises at least one type selected from the group consisting of guar gum and guar gum degradation products among the aforementioned substances. From the viewpoint of further improving heat resistance and a disintegration property in the oral cavity, the capsule film further preferably comprises a guar gum degradation product as galactomannan. Even in a case where the film percentage is relatively high (i.e. a relatively thick film), an excellent disintegration property in the oral cavity can be maintained by allowing the capsule film to comprise a guar gum degradation product. A commercially available product can be used as galactomannan.

In some embodiments, the capsule film contains at least one type selected from gelatin and galactomannan. Such a form is excellent in terms of a disintegration property in the oral cavity.

The film-forming components may also be capable of forming hydrophilic colloids, and may function as plasticizers, sweeteners, dietary fibers, bulking agents, etc., depending on the types of the film-forming components. Commercially available products may also be used as such film-forming components.

The film may comprise plasticizers, coloring agents, sweeteners, flavors, antioxidants, antiseptics, etc. These components may be used alone as a single type, or may also be used in combination of two or more types.

The film may comprise plasticizers in order to adjust the film strength, etc. Examples of such plasticizers may include polyhydric alcohols (e.g., (poly)alkylene glycols such as ethylene glycol, propylene glycol, polyethylene glycol, and polypropylene glycol; and polyols having 3 or more hydroxyl groups, such as glycerin), sugars [e.g., monosaccharides (e.g., dextrose, fructose, glucose, galactose, etc.), disaccharides (e.g., sucrose, maltose, trehalose, coupling sugar, etc.), oligosaccharides (e.g. maltooligosaccharides, etc.), and the like], sugar alcohols (e.g. the above-exemplified sugar alcohols such as sorbitol, maltitol, lactitol, palatinit, xylitol, mannitol, galactitol, and erythritol), starch, starch derivatives (e.g., polydextrose, dextrin, maltodextrin, indigestible dextrin, cyclodextrin (α, β, or y), etc.), cellulose derivatives (e.g., hydroxypropyl cellulose, hydroxypropyl methyl cellulose, methyl cellulose, carboxymethyl cellulose, etc.), and the like], polyvinyl alcohol, and triacetin. The plasticizers may be used alone or in combination of two or more types. It is to be noted that sugar alcohol, starch, starch derivatives and the like can also be used as film-forming components, as described above.

When the capsule film contains a plasticizer, the content of the plasticizer in 100 parts by weight of gelatin is preferably 1 to 40 parts by weight, more preferably 1 to 30 parts by weight, further preferably 1 to 25 parts by weight, and particularly preferably 5 to 20 parts by weight. The plasticizer used together with gelatin is preferably at least one type selected from the group consisting of polyhydric alcohols (e.g., glycerin, propylene glycol, butylene glycol, diglycerin, and dipropylene glycol), sugars, and sugar alcohols (e.g., glucose, sucrose, erythritol, xylitol, sorbitol, dextrin, maltodextrin, etc.).

When the capsule film contains polysaccharides, the content of a plasticizer in 100 parts by weight of the polysaccharides is preferably 1 to 30 parts by weight, more preferably 1 to 25 parts by weight, and further preferably 5 to 20 parts by weight. The plasticizer used together with polysaccharides is preferably at least one type selected from the group consisting of polyhydric alcohols (e.g., glycerin, propylene glycol, butylene glycol, diglycerin, and dipropylene glycol), sugars, and sugar alcohols (e.g., glucose, sucrose, erythritol, xylitol, sorbitol, dextrin, maltodextrin, etc.).

### < Content >

The content is not particularly limited, as long as it can be included in the capsule film within a range in which it does not impair the effects of the invention. The content may be a solid, a liquid, etc. From the viewpoint of maintaining a favorable interface with the film, the content preferably contains an oily component.

The oily component is not particularly limited, and examples thereof may include a flavor, grain oil, fruit oil, and a lipophilic solvent. In several embodiments, the oily component preferably contains a flavor, and more preferably contains a flavor and a lipophilic solvent. Moreover, the oil component may be prepared as an oil/water/oil type emulsion, using known materials. Such oily components may be used alone as a single type, or may also be used as a mixture of two or more types.

Moreover, the content may also contain flavors, coloring agents, flavoring agents, sweeteners, antioxidants, seasonings, spices, acidifiers, bitter flavorings, clarifying agents, bioactive substances (vitamins, amino acids, collagen, collagen peptides, lipids, isoflavones, minerals, enzymes, hormones, etc.), microorganisms (bacteria such as lactic acid bacteria, bifidobacteria, natto bacteria, and yeast fungi; and fungi such as yeasts), etc.

In several embodiments, the content contains a flavor. The flavor is not particularly limited, as long as it is an oily component. Either a natural flavor or a synthetic flavor may be used. The flavor may be used alone as a single type, or may also be used as a mixture of two or more types.

The flavor may be either a synthetic flavor or a natural flavor, and may also be a mixed flavor or a flavor composition.

The flavor is not particularly limited, as long as it is a component that can be used as a component having an aroma, a flavor, etc.

Examples of the components of the synthetic flavor (or natural flavor) may include esters, alcohols, aldehydes, ketones, phenols, ethers, lactones, hydrocarbons, nitrogen-containing and/or sulfur-containing compounds, and acids.

The esters (e.g., fatty acid or aromatic carboxylic acid ester) are not particularly limited, and examples thereof may include propyl formate, terpinyl formate, ethyl acetate, octyl acetate, nonyl acetate, decyl acetate, dodecyl acetate, dihydromyrcenyl acetate, linalyl acetate, citronellyl acetate, geranyl acetate, neryl acetate, tetrahydromugol acetate, lavanduril acetate, nerolidol acetate, dihydrocuminyl acetate, terpinyl acetate, citryl acetate, nopyl acetate, dihydroterpinyl acetate, 2,4-dimethyl-3-cyclohexenyl methyl acetate, miraldyl acetate, vetikol acetate, decenyl propionate, linalyl propionate, octyl butyrate, cinnamyl butyrate, isopropyl isobutyrate, octyl isobutyrate, linalyl isobutyrate, 2-methylpentyl 2-methylvalerate, methyl 3-hydroxyhexanoate, methyl octanoate, methyl nonanoate, methyl undecylenate, linalyl benzoate, methyl silicate, isoprenyl angelate, methyl geranate, triethyl citrate, ethyl acetoacetate, ethyl 2-hexylacetoacetate, ethyl benzylacetoacetate, allyl 2-ethylbutyrate, ethyl 3-hydroxybutyrate, ethyl nonanoate, ethyl decanoate, ethyl 2,4-decadienate, methyl anthranilate, and ethyl N-methylanthranilate.

The alcohols are not particularly limited, and examples thereof may include 3-heptanol, 3-octanol, 1-nonanol, 1-decanol, 1-undecanol, 1-dodecanol, prenol, 10-undecen-1-ol, dihydrolinalool, tetrahydromugol, myrcenol, dihydromyrcenol, tetrahydromyrcenol, ocimenol, terpineol, 3-tuyanol, benzyl alcohol, β-phenylethyl alcohol, trans-2-hexenol, cis-4-hexenol, citronellol, rosinol, geraniol, nerol, linalool, tetrahydrolinalool, dimethyloctanol, hydroxycitronellol, isopulegol, L-menthol, terpineol, dihydroterpineol, carveol, dihydrocarveol, perillyl alcohol, 4-tuyanol, myrtenol, α-fenchol, farnesol, nerolidol, cedrenol, anise alcohol, hydrotropa alcohol, 3-phenylpropyl alcohol, cinnamic alcohol, and amylcinnamic alcohol.

The aldehydes are not particularly limited, and examples thereof may include acetaldehyde, n-hexanal, n-heptanal, n-octanal, n-nonanal, decanal, undecanal, tridecanal, tetradecanal, trans-2-hexenal, cis-4-decenal, 10-undecenal, trans-2-dodecenal, 3-dodecenal, trans-2-tridecenal, 2,4-hexadienal, 5,9-dimethyl-4,8-decadienal, citral, α-methylenecitronellal, citronellyloxyacetaldehyde, myrtenal, neral, α- or β-sinensal, myrac aldehyde, phenylacetaldehyde, octanal dimethylacetal, n-valeraldehyde, isovaleraldehyde, 2-methylbutanal, citronellal, hydroxycitronellal, safranal, bernaldehyde, benzaldehyde, phenylpropionaldehyde, cinnamic aldehyde, salicylaldehyde, anisaldehyde, p-methylphenoxyacetaldehyde, acetaldehyde diethyl acetal, 2-phenyl-2,4-pentanediol acetal, 2 hexenal diethyl acetal, and 2-hexyl-5-methyl-1,3-dioxolane.

The ketones are not particularly limited, and examples thereof may include 2-pentanone, 3-heptanone, 3-octanone, 2-nonanone, 2-undecanone, 2-tridecanone, methylheptenone, dimethyloctenone, geranylacetone, 2,3,5-trimethyl-4-cyclohexenyl-1-methylketone, neron, nootkatone, dihydronootkatone, acetophenone, 4,7-dihydro-2-isopentyl-2-methyl-1,3-dioxepine, 2,3-hexadione, ethyl isoamyl ketone, diacetyl, amyl cyclopentenone, 2-cyclopentyl cyclopentanone, hexyl cyclopentanone, heptyl cyclopentanone, cis-jasmone, dihydrojasmone, trimethylpentylcyclopentanone, α-dynascone, trimethylcyclohexenylbutenone, ionone, allylionone, pricatone, cashmeran, 1-carvone, menthone, camphor, p-methylacetophenone, p-methoxyacetophenone, benzylideneacetone, raspberry ketone, methylnaphthyl ketone, benzophenone, furfural acetone, homofuronol, maltol, ethylmaltol, and ethyl acetoacetate ethylene glycol ketal.

The phenols are not particularly limited, and examples thereof may include thymol, carvacrol, β-naphthol isobutyl ether, anethole, β-naphthol methyl ether, β-naphthol ethyl ether, guaiacol, creosol, veratrol, hydroquinone dimethyl ether, 2,6-dimethoxyphenol, 4-ethylguaiacol, eugenol, isoeugenol, ethyl isoeugenol, and tert-butyl hydroquinone dimethyl ether.

The ethers are not particularly limited, and examples thereof may include decyl vinyl ether, α-terpinyl methyl ether, isoproxene, 2,2-dimethyl-5-(1-methyl-1-propenyl)-tetrahydrofuran, rosefuran, 1,4-cineole, nerol oxide, 2,2,6-trimethyl-6-vinyltetrahydropyran, methylhexyl ether, ocimene epoxide, limonene oxide, lubofix, caryophyllene oxide, linalool oxide, 5-isopropenyl-2-methyl-2-vinyltetrahydrofuran, theaspirane, and rose oxide.

The lactones are not particularly limited, and examples thereof may include γ-undecalactone, δ-dodecalactone, γ-hexalactone, γ-nonalactone, γ-decalactone, γ-dodecalactone, jasmine lactone, methyl γ-decalactone, jasmolactone, propylidene phthalide, δ-hexalactone, δ-2-decenolactone, ε-dodecalactone, dihydrocoumarin, and coumarin.

Examples of the hydrocarbons may include ocimene, limonene, α-phellandrene, terpinene, 3-carene, bisabolene, valencene, allocimene, myrcene, farnesene, α-pinene, β-pinene, camphene, terpinolene, p-cymene, cedrene, β-caryophyllene, and cadinene.

The nitrogen-containing and/or sulfur-containing compounds are not particularly limited, and examples thereof may include methyl anthranilate, ethyl anthranilate, methyl N-methylanthranilate, methyl N-2'-methylpentylideneanthranilate, ligantral, dodecanenitrile, 2-tridecenenitrile, geranyl nitrile, citronellyl nitrile, 3,7-dimethyl-2,6 nonadienonitrile, indole, 5-methyl-3-heptanone oxime, limonenethiol, 1-p-menthen-8-thiol, butyl anthranilate, cis-3-hexenyl anthranilate, phenylethyl anthranilate, cinnamyl anthranilate, dimethyl sulfide, and 8-mercaptomenthone.

Examples of the acids are not particularly limited, and examples thereof may include acetic acid, propionic acid, butyric acid, valeric acid, hexanoic acid, octanoic acid, decanoic acid, dodecanoic acid, 2-decenoic acid, geranic acid, 2-methylbutyric acid, 2-ethylbutyric acid, phenylacetic acid, cinnamic acid, isobutyric acid, isovaleric acid, 3-methylvaleric acid, 2-hexenoic acid, 2-methyl-2-pentenoic acid, 2-methylheptanoic acid, myristic acid, stearic acid, lactic acid, pyruvic acid, and cyclohexanecarboxylic acid.

Examples of the natural flavor (the raw material of the natural flavor) that can be used herein may include various natural flavors such as minty, herbal, and citrus flavors, but are not limited thereto.

Examples of the natural flavor (the raw material of the natural flavor) may include sweet orange, bitter orange, neroli, mandarin, petitgrain, bergamot, *onshu* mandarin, *dai-dai* orange, *hassaku* orange, *iyokan* orange, lemon, lime, grapefruit, *yuzu, sudachi, kabosu,* sweetie, citronella, elemi, olibanum, marjoram, angelica root, star anise, basil, hay, calamus, caraway, cardamom, pepper, cascarilla, ginger, sage, clary sage, clove, coriander, eucalyptus, fennel, pimento, juniper, fenugreek, laurel, mace, cedar, cnidium rhizome, almond, apple mint, anise, artemisia, alfalfa, apricot, ambrette, rush, strawberry, fig, ylang-ylang, wintergreen, plum, elder, Japanese pagoda tree, oakmoss, allspice, orris, currant, cassia, chamomile, galanga, quince, gambier, guava, gooseberry, camphor tree, gardenia, kubeb, cumin, cranberry, kola, Japanese pepper, sandarac, sandalwood, sandal red, perilla, civet, jasmine, ginger, ginseng, cinnamon, star fruit, styrax, spearmint, geranium, thyme, tabana, tansy, tangerine, champaca, tuberose, camellia, dittany, truffle balsam, tonka, nut, jujube, nutmeg, Nandina domestica, niaouli, carrot, violet, pineapple, hibiscus, honey, Japanese mint, passionfruit, vanilla, rose, hyssop, cypress, fusel oil, buchu, peppermint, pepino, verbena, bordelaise, pawpaw, bordeaux, bologna, pine, mango, beeswax, mimosa, milfoil, musk, maple, melissa, melon, peach, lavender, liqueur, litsea, linden, rue, Java apple, rosemary, and lovage.

Specific examples of the flavor (flavor composition) may include: citrus flavors, such as orange flavor, lemon flavor, lime flavor, grapefruit flavor, *yuzu* flavor, and *sudachi* flavor; berry flavors, such as strawberry flavor, raspberry flavor, and blueberry flavor; tropical fruit flavors, such as mango flavor, papaya flavor, guava flavor, passion fruit flavor, and lychee flavor; fruit flavors, such as apple flavor, grape flavor, pineapple flavor, banana flavor, peach flavor, melon flavor, apricot flavor, plum flavor, and cherry flavor; tea and coffee flavors, such as green tea flavor, oolong tea flavor, black tea flavor, and coffee flavor; meat flavors, such as beef flavor, pork flavor, and chicken flavor; herb and spice flavors, such as asafoetida flavor, ajowan flavor, anise flavor, angelica flavor, fennel flavor, allspice flavor, cinnamon flavor, kasha flavor, chamomile flavor, mustard flavor, cardamom flavor, caraway flavor, cumin flavor, clove flavor, pepper flavor, coriander flavor, sassafras flavor, savory flavor, Japanese pepper flavor, perilla flavor, juniper berry flavor, ginger flavor, star anise flavor, horseradish flavor, sage flavor, thyme flavor, tarragon flavor, dill flavor, capsicum flavor, jujube flavor, nutmeg flavor, basil flavor, parsley flavor, marjoram flavor, rosemary flavor, laurel flavor, and Japanese horseradish flavor; vegetable flavors, such as onion flavor, garlic flavor, leek flavor, cabbage flavor, carrot flavor, celery flavor, *shiitake* mushroom flavor, *matsutake* mushroom flavor, tomato flavor, burdock flavor, and *mitsuba* flavor; minty flavors, such as peppermint flavor, spearmint flavor, and Japanese peppermint flavor; vanilla flavors; nutty flavors, such as almond flavor, cashew nut flavor, peanut flavor, hazelnut flavor, walnut flavor, chesnut flavor, macadamia nut flavor, pecan nut flavor, pistachio flavor, Brazil nut flavor, and coconut flavor; Western liquor flavors, such as wine flavor, whiskey flavor, brandy flavor, rum flavor, gin flavor, and liqueur flavor; marine product flavors, such as seafood flavors, crustacean flavors, knotweed flavors, and seaweed flavors; grain flavors, such as corn flavor, potato flavor, sweet potato flavor, rice flavor, and bread flavor; and sugar flavors, such as honey flavor, maple syrup flavor, sugar flavor, brown sugar flavor, and molasses flavor.

The properties of the flavor can be selected according to the dosage form, the form of ingestion, etc. The flavor may be solid, liquid, etc., and may also be nonvolatile or volatile.

In several embodiments, the content comprises caryophyllene. Examples of the caryophyllene may include β-caryophyllene, α-caryophyllene, isocaryophyllene, and metabolites or derivatives of caryophyllene (e.g., caryophyllene oxides such as β-caryophyllene oxide). The composition of one aspect of the present invention may comprise these substances alone or in combination of two or more types. In several embodiments, caryophyllene preferably comprises β-caryophyllene, and may further comprise caryophyllene that is not β-caryophyllene [for example, at least one type selected from among α-caryophyllene, isocaryophyllene, metabolites or derivatives of caryophyllene].

A commercially available product may be used as such caryophyllene, or caryophyllene produced (purified) by a commonly used method (i.e. chemically synthesized caryophyllene) may also be used.

In the present description, the term "β-caryophyllene" may be used as a generic term to include caryophyllene that is not β-caryophyllene in some cases. In several embodiments, the percentage of β-caryophyllene in the total caryophyllene is, for example, 30% by mass or more, 50% by mass or more, 75% by mass or more, 90% by mass or more, 100% by mass (substantially 100% by mass), etc.

The content of caryophyllene is not particularly limited, and can be selected according to the desired functions (e.g., volatilization enhancement, dissolution enhancement, freezing resistance, and other functions of caryophyllene, etc.), dosage form, and the like.

The content (core) may be generally insoluble (non-erosive) in the film (or in the part that is in contact with the film).

### < Production method >

The method for producing a capsule of the present embodiment is not particularly limited. The capsule having a typical form is a seamless capsule or a rotary-type soft capsule (hereinafter also referred to as a "rotary capsule").

The method for producing a seamless capsule is not particularly limited, and the seamless capsule can be produced by a dripping method. For example, the seamless capsule can be produced by the production method described in Japanese Patent No. 6603817, etc.

The method for producing a capsule of the present embodiment is, for example, a method of dropping a liquid containing the components of the capsule film, and a liquid containing the content, into a cooling medium or into air.

Specifically, here is used a device equipped with: a nozzle unit including, in a concentric shape, an outer nozzle through which the liquid containing the components of the capsule film is passed and an inner nozzle that supplies the liquid containing the content; and a forming tube (a forming tube established downstream of the nozzle unit or on the axis of the nozzle unit). The liquid containing the content is discharged from the discharge port of the inner nozzle, and the liquid containing the components of the capsule film is from the discharge port of the outer nozzle, respectively, into the forming tube. At this time, in the forming tube, the capsule film contains the content due to the aforementioned discharge. The capsule film is dropped into the cooling medium or into the air with the content contained, and a capsule is formed. The dropped capsule may be dried.

The method for producing a rotary capsule is not particularly limited, either. The rotary capsule can be produced by a rotary-type production method, in which crimping-molding process is performed using a mold called a die roll. Examples of the method for producing a rotary capsule may include a punching method using a rotary die-type soft capsule-filling machine, etc., and a flat plate method. Such a rotary die-type soft capsule-filling machine is used for a method, in which two film sheets molded by spreading a liquid containing the components of the capsule film on a rotating drum are punched into a capsule shape by using a pair of rotating molds (die rolls), and according to this method, soft capsule molding and the filling of the capsule content are carried out at the same time.

The shape of the rotary capsule is not particularly limited, and it may be oval, elliptical, spherical, acorn, triangular, peanut, or bottle-shaped.

It is to be noted that the temperature of the liquid containing the components of the capsule film, the temperature of the liquid containing the content, cooling temperature, cooling time, drying temperature, drying time, and other production conditions can be selected, as appropriate, according to the component composition of the capsule film or the content, film percentage, film thickness, capsule outer diameter, etc.

### 2. Smokeless tobacco product

The capsule of the present embodiment is used in smokeless tobacco products for oral use.

In the present description, the term "smokeless tobacco product" means a tobacco product that is not burned. In the present description, the term "smokeless tobacco product for oral use" means a smokeless tobacco product used in the oral cavity.

The smokeless tobacco product comprises a tobacco compound. In the present description, the "tobacco compound" includes a material comprising tobacco and/or a tobacco substitute or alternative. In several embodiments, the tobacco compound comprises tobacco. In the present description, the term "tobacco" includes any parts of a member of the genus tobacco, such as leaves, flowers or stems, and the reconstituted materials thereof. In the present description the term "tobacco" includes tobacco extracts. In several embodiments, the tobacco is in a crushed tobacco and/or particulate form.

In several embodiments, the tobacco compound may comprise a flavor.

The amount of tobacco in the tobacco compound is not particularly limited. In several embodiments, the amount of tobacco in the smokeless tobacco product may be, for example, at least 5% by weight, or at least 10% by weight, or 20% by weight, with respect to the weight of the smokeless tobacco product. In several embodiments, the amount of tobacco in the smokeless tobacco product may be, for example, about 90% by weight or less, or 85% by weight or less, or 70% by weight or less, with respect to the weight of the smokeless tobacco product.

There are various types of smokeless tobacco products, including chewing tobacco and snuff tobacco, and in the present invention, the smokeless tobacco product may have any of these forms.

In several embodiments, the smokeless tobacco product may be dry-type or wet-type snuff tobacco.

In several embodiments, the wet snuff tobacco includes Sweden-type snuff tobacco, and it is also referred to as snus-type tobacco or snus. The snus is a wet powdered tobacco product derived from a deformation of dry snuff tobacco. The snus is typically used by placing it under the upper lip.

In several embodiments, the smokeless tobacco product is in the form of wet snuff tobacco and/or chewing tobacco.

In several embodiments, the smokeless tobacco product is in the form of dry-type snuff tobacco.

The smokeless tobacco product may be in the form of, for example, a pill, a pellet, a tablet, a coin, a bead, an oval, an oblong, a cube, a film, a flake, a stick, a form, or gel. In several embodiments, the smokeless tobacco product is soluble.

The smokeless tobacco product is designed to be used within the oral cavity of the tobacco user, so that the user can enjoy the tobacco compound and capsule in the product.

In some embodiments, in the smokeless tobacco product, the tobacco compound is surrounded by the packaging. For example, a common method of providing a smokeless tobacco product (snuff tobacco) is to hermetically seal the tobacco compound in a water-permeable package. When the smokeless tobacco product is placed in the oral cavity, substances such as nicotine diffuse through the packaging into the user's mouth and are absorbed through the user's mucous membranes.

In several embodiments, the smokeless tobacco product divided into small packages contains a tobacco compound and a capsule in a water-permeable package (e.g., a pouch, a sachet). The number of the capsules of the present embodiment contained in the smokeless tobacco product may be one or more. Moreover, the capsules may be dispersed in the tobacco compound, or may also be disposed at different locations from the tobacco compound.

In several embodiments, the capsules contained in the smokeless tobacco product are destructed by being chewed by the user in the oral cavity. In several embodiments, the capsules contained in the smokeless tobacco product are destructed by being dissolved in the water content in the oral cavity. When the smokeless tobacco product is placed in the oral cavity, the capsules in the water-permeable packaging are destructed by being chewed by the user and/or by the action of the water content in the oral cavity, and can release the contents. Since the capsule of the present embodiment has an excellent disintegration property and a good fracture hardness, the user can enjoy good chewability (cracking sensation) in the oral cavity, and in addition, since the capsule film is quickly disintegrated in the oral cavity during use, the user can enjoy the taste and aroma of the contents (for example, flavor) in a state in which the foreign-body sensation is reduced or eliminated.

After the user has finished the use of the smokeless tobacco product, even if the outer water-permeable packaging is still present, it can be removed from the user's mouth and can be discarded. Alternatively, even when such an outer pouch is present after the use, it can be produced from a soluble or dispersible material, so that the tobacco compound and the pouch can be ingested by the user.

In several embodiments, the smokeless tobacco product can be provided to the user in an undivided form. In one embodiment, the smokeless tobacco product is filled in a loose form into a container, for example, a can, a smell bag, or a tin can.

In several embodiments, the undivided smokeless tobacco product contains, within a container, the tobacco compound and the capsule. The number of the capsules of the present embodiment contained in the smokeless tobacco product may be one or more.

In several embodiments, the capsules contained in the smokeless tobacco product are placed in the oral cavity, together with the tobacco compound, and the capsules are destructed by being chewed by the user in the oral cavity and/or by being dissolved in water in the oral cavity.

### Examples

Hereinafter, the present invention will be described in detail with reference to the following examples. However, these examples are not limited to limit the technical scope of the present invention. It is to be noted that both "part" and "%" used in individual examples are on a weight basis, unless otherwise specified.

The components used in the following examples and comparative examples are as follows.

### [Film-forming components]

- Bovine gelatin 300 Bloom (product name: CLV: purchased from Nitta Gelatin Inc.)
- Pork gelatin 300 Bloom (product name: ROUSSELOT 300PS8 GELATINE, purchased from Rousselot)
- Pork gelatin 250 Bloom (product name: BCN250SC, purchased from Nitta Gelatin Inc.)
- Fish gelatin 230 Bloom (product name: Ikuos SCG-230L, purchased from Nitta Gelatin Inc.)
- Galactomannan: Guar gum degradation product (product name: Sunfiber R, purchased from Taiyo Kagaku Co., Ltd.)
- Gellan gum (CP Kelco Japan)
- Agar (Ina Food Industry Co., Ltd.)
- Sodium alginate (KIMICA Corporation)

### [Plasticizers]

- Glycerin (purchased from Sakamoto Yakuhin Kogyo Co., Ltd.)
- Sorbitol (Mitsubishi Corporation Life Sciences Limited)
- Dextrin (Paindex #2, Matsutani Chemical Industry Co., Ltd.)
- Xylitol (product name: Xylit, Mitsubishi Corporation Life Sciences Limited)
- erythritol (product name: Erythritol T Fine Powder, MITSUBISHI-CHEMICAL FOODS CORPORATION)

### [Other components]

- Sucralose (product name: Sucralose 600, San-Ei Gen F.F.I., Inc.)
- Acesulfame potassium (product name: Sanet D, MC Food Specialties Inc.)
- Pigment (Food Blue No.1)

### [Contents]

- MCT (medium chain triglyceride) (product name: COCONARD ML, Kao Corporation)
- Various types of flavors: In-house formulated

Moreover, individual physical properties were measured according to the following methods.

### [Diameter of capsule (outer diameter of capsule) (D)]

Digital calipers (product name: Quick Mini 25, model number: PK-0510SU, measuring range: 0 to 25mm, manufactured by Mitutoyo Corporation) were used to measure the major and minor diameters of the capsule.

The diameter of the capsule (average diameter) was calculated as an additive average of the major and minor diameters.

### [Film thickness]

The capsule was cut horizontally and vertically, and the film thickness was measured using a digital microscope (product name: VHX-900, manufactured by Keyence).

The film thickness was obtained as an additive average of five arbitrary points.

### [Total weight of capsule, film weight, content weight, and film percentage]

The total weight of the capsule was obtained by measuring the weight of one capsule. This measurement was performed 20 times for each different capsules, and the total weight of the capsule was obtained as an additive average of the measured weights.

The weight of the capsule film was obtained by cutting the capsule in half, washing the capsule film with hexane, fully wiping off the hexane, and measuring the weight of the film. This measurement was performed 20 times for each different capsules, and the weight of the capsule film was obtained as an additive average of the measured weights.

The weight of the capsule content was calculated according to the following equation: 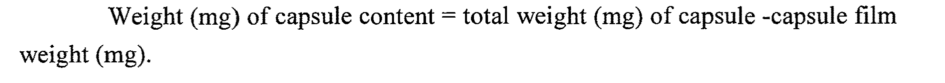 Weight (mg) of capsule content = total weight (mg) of capsule -capsule film weight (mg).

The film percentage was calculated according to the following equation: 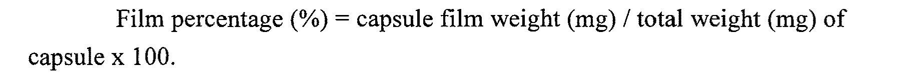 Film percentage (%) = capsule film weight (mg) / total weight (mg) of capsule × 100.

It is to be noted that the weights (the total weight of the capsule and the weight of the capsule film) were measured using the electronic balance GX-200 manufactured by A & D Company, Limited.

### [Fracture hardness, fracture distance, distortion percentage, the fracture hardness per fracture distance, the fracture hardness per capsule diameter, and fracture energy, of capsule]

The fracture hardness (AV) (N) of the capsule is a value obtained by measuring at 22°C in 60% RH using the rheometer CR-3000EX (a measuring instrument, manufactured by SUN SCIENTIFIC CO. LTD.) and then analyzing by Rheo Data analyzer (Rheo Data analyzer for Win, automatic analysis software for physical properties data, manufactured by SUN SCIENTIFIC CO., LTD.).

The fracture distance (L) (mm) of the capsule is a value obtained by measuring at 22°C in 60% RH using the rheometer CR-3000EX (measuring instrument, manufactured by SUN SCIENTIFIC CO., LTD.) and then analyzing by Rheo Data analyzer (Rheo Data analyzer for Win, automatic data analysis software for physical properties, manufactured by SUN SCIENTIFIC CO., LTD.).

The distortion percentage of the capsule (%) was calculated according to the following equation:$Distortion percentage = fracture distance \left(L\right) / capsule diameter \left(D\right) \times 100 .$

The fracture hardness per fracture distance (hardness) (N/mm) was calculated according to the following equation: 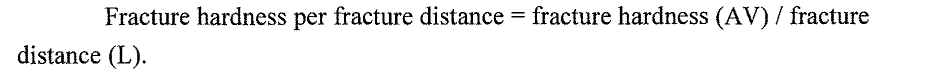 Fracture hardness per fracture distance = fracture hardness (AV) / fracture distance (L).

The fracture hardness per capsule diameter (N/mm) was calculated according to the following equation: 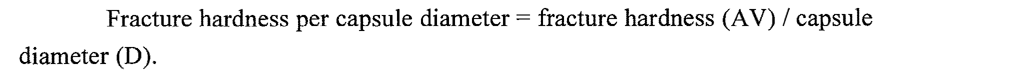 Fracture hardness per capsule diameter = fracture hardness (AV) / capsule diameter (D).

The fracture energy of the capsule (N·mm) was calculated according to the following equation:$Fracture energy = fracture hardness \left(AV\right) \times fracture distance \left(L\right) / 2 .$

### [Disintegration time]

The disintegration time was measured by the following disintegration test.

### < Disintegration test >

The disintegration test was carried out in accordance with the 18th revised Japanese Pharmacopoeia, General Test Method "Disintegration Test Method" (Capsule Agents). Specifically, a capsule and an auxiliary board were placed in a testing apparatus (NT-410 manufactured by TOYAMA SANGYO CO., LTD.), and the test was carried out using water with 37±2°C as a test solution, and the time until the residue of the sample (capsule) was completely dissolved and could not be seen (complete disintegration) was measured as a "disintegration time." The measurement was performed on 6 samples, and an average value thereof was then obtained.

### [Examples 1 to 9 and Comparative Examples 1 to 4]

### (1) Preparation of capsule film solution

The capsule film solution was prepared by mixing individual components in the mixing amounts (parts by weight) shown in Table 1, and then appropriately stirring them at a predetermined temperature (approximately 65°C to 100°C) for 2 hours or more for dissolution, so as to prepare a capsule film solution.

### (2) Preparation of content

Raw materials were mixed, so that they became homogeneous. It is to be noted that the raw materials need to be liquid upon production of the capsule. Thus, in a case where the raw materials were in a gelatinous state or had poor liquidity, the raw materials were heated, as appropriate, so that they were allowed to have liquidity. During mixing, a stirrer and/or a fine grinder were used, as necessary.

The contents in the examples and comparative examples are as follows.
Examples 1, 3, 7, and 8: L-menthol and MCT were mixed and used. In the contents, the ratio of L-menthol was set to be 10% by weight, and the ratio of MCT was set to be 90% by weight.
Example 2: MCT
Example 4: Mango flavor
Example 5: Mint flavor
Example 6: Iced mint flavor
Example 9: Spice flavor (containing 2% β-caryophyllene)
Example 10: Grape flavor
Example 11: Black tea flavor
Example 12: Lime flavor
Comparative Example 3: Orange flavor

### (3) Production of seamless capsule

The seamless capsule was produced by an in-liquid dripping method. Specifically, the above-described capsule film solution and content were placed in a seamless capsule manufacturing machine (product name: Spherex (registered trademark), manufactured by Freund Corporation), and around a multi-nozzle, the temperature of the content was controlled to be 20°C with the set value of ±2°C. The temperature of the capsule film solution was controlled to be 70°C with the set value of ±2°C, and the mixture was cooled with cooling oil (about 10°C) to produce capsules. Subsequently, the obtained capsules were treated by drying (25°C, humidity: 50% RH or less) to obtain seamless capsules.

### [Comparative Examples 5 to 8]

It is to be noted that, in Comparative Examples 5, 6 and 8, the capsules contained in the filters of commercially available cigarette tobacco (cigarettes) were removed and used.
Comparative Example 5: The capsule contained in the filter on the mouth side of "KOOL BOOST DOLUBLE 5" (manufacturing company: British American Tobacco Plc)
Comparative Example 6: The capsule contained in "MEVIUS OPTION PURPLE 5" (manufacturing company: JT)
Comparative Example 7: The capsule for use in the filter of the cigarette tobacco purchased from Kunming Yippin Technology Co., Ltd. (product name: *Enyo Bakuju* (flavor), brand name: *Nenyu*)
Comparative Example 8: The capsule contained in the filter on the mouth side of "Marlborough-W-Burst-Purple-5" (manufacturing company: Philip Morris International Inc.)

The physical properties of the seamless capsules obtained in the above-described examples and comparative examples were measured. The results are shown in Table 2.

### [Table 1]

**Table 1**

| | | | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Comp. Ex. 4 |
|---|---|---|---|---|---|---|---|---|---|---|---|---|---|---|---|
| | Film-forming components | Pork gelatin 250 Bloom | 100 | 100 | 100 | 100 | | | | | 100 | | | 100 | |
| | | Pork gelatin 300 Bloom | | | | | | | | 100 | | | | | |
| | | Bovine gelatin 300 Bloom | | | | | 100 | 100 | 100 | | | | | | |
| | | Agar | | | | | | | | | | 2.83 | 2.83 | | 2.31 |
| Components (part by weight) | | Guar gum degradation product | | | | | | | | | 12.5 | 2 | 2 | 15 | 2.2 |
| | | Sodium alginate | | | | | | | | | | 0.9 | 0.9 | | 0.8 |
| | | Carrageeenan | | | | | | | | | | 0.73 | 0.73 | | |
| | Plasticizers | Glycerin | 20 | 20 | 20 | 20 | 20 | 20 | 20 | 40 | 14 | 0.8 | 0.8 | 8 | 1.67 |
| | | Dextrin | | | | | | | | | | 0.1 | 0.1 | | |
| | | Xylitol | | | | | | | | 5 | | | | | 0.21 |
| | | Erythritol | | | | | | | | 20 | | | | | |
| | Others | Pigment | 0.3 | 0.3 | 0.3 | 0.3 | 0.3 | 0.3 | 0.3 | 0.3 | 4 | | | 0.6 | |
| | | Sucralose | 0.045 | | 0.045 | 0.045 | 0.045 | 0.045 | 0.045 | 0.045 | | 0.03 | 0.03 | | |
| | | Acesulfame potassium | | | | | | | | 0.045 | | | | | |

### [Table 2]

**Table 2**

| | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Comp. Ex. 4 | Comp. Ex. 5 | Comp. Ex 6 | Comp. Ex. 7 | Comp. Ex. 8 |
|---|---|---|---|---|---|---|---|---|---|---|---|---|---|---|---|---|---|
| Capsule diameter (mm) | 5 | 5 | 5 | 5 | 5 | 5 | 5 | 6 | 3.1 | 5 | 3.4 | 3.4 | 4 | 3.4 | 3.4 | 3 | 3.4 |
| Total weight (mg) | 66.5 | 66.0 | 66.0 | 65.0 | 66.0 | 66.0 | 66.0 | 117.5 | 16.5 | 65.0 | 21.7 | 21.7 | 32.2 | 21.4 | 22.8 | 15.6 | 21.4 |
| Film weight (mg) | 6.5 | 6.0 | 6.0 | 5.0 | 6.0 | 6.0 | 6.0 | 9.4 | 3.5 | 7.0 | 2.4 | 2.4 | 3.2 | 2.6 | 5.6 | 1.3 | 4.4 |
| Content weight (mg) | 60.0 | 60.0 | 60.0 | 60.0 | 60.0 | 60.0 | 60.0 | 108.1 | 12.9 | 58.0 | 19.3 | 19.3 | 29.0 | 18. 8 | 17.2 | 14.3 | 16.9 |
| Film percentage (%) | 9.8 | 9.1 | 9.1 | 7.7 | 9.1 | 9.1 | 9.1 | 8.0 | 21.2 | 10.8 | 11.0 | 11.0 | 9.9 | 12.1 | 24.6 | 8.3 | 20.6 |
| Film thickness (*µ*m) | 75 | 70 | 70 | 60 | 70 | 70 | 70 | 65 | 110 | 85 | 60 | 60 | 60 | 65 | 140 | 40 | 115 |
| Fracture hardness (N) | 57.1 | 70.5 | 48.2 | 34.2 | 41.7 | 30.2 | 24.6 | 58.7 | 42.8 | 33.5 | 17.9 | 14.7 | 16.9 | 16.9 | 13.7 | 15.3 | 14.8 |
| Fracture distance (mm) | 3.5 | 3.7 | 3.4 | 3.1 | 3.3 | 2.9 | 2.5 | 5.4 | 2.0 | 2.7 | 1.9 | 1.0 | 2.5 | 1.1 | 0.7 | 1.3 | 0.6 |
| Distortion percentage (%) | 70.3 | 74.8 | 68.4 | 62.7 | 66.4 | 59.5 | 50.7 | 96.3 | 59.0 | 54.7 | 56.0 | 27.9 | 62.0 | 32.3 | 19.1 | 45.4 | 18.5 |
| Fracture hardness per fracture distance (N/mm) | 16 | 19 | 14 | 11 | 13 | 10 | 10 | 11 | 21 | 12 | 9 | 15 | 7 | 15 | 20 | 12 | 25 |
| Fracture hardness per capsule diameter (N/mm) | 11 | 14 | 10 | 7 | 8 | 6 | 5 | 10 | 14 | 7 | 5 | 4 | 4 | 5 | 4 | 5 | 4 |
| Fracture energy (N*mm) | 100 | 132 | 82 | 53 | 69 | 44 | 31 | 158 | 43 | 45 | 17 | 7 | 21 | 9 | 5 | 10 | 4 |
| Disintegration time | 2 min 22 sec | 1 min 21 sec | 2 min 1 sec | 1 min 31 sec | 1 min 6 sec | 1 min 41 sec | 1 min 21 sec | 51 sec | 1 min 30 sec | 24 min | 6 min 12 sec | 15 min | 4 min 50 sec | 1 min 30 sec | 6 min 10 sec | 55 min 20 sec | 5 min 30 sec |

Chewing tobacco products containing capsules were produced using the capsules of Examples 3 and 5 to 7 and Comparative Example 2, among the prepared capsules. Specifically, one capsule from each of Examples 3 and 5 to 7 and Comparative Example 2 was placed and filled into a non-woven fabric bag containing the tobacco compound of the chewing tobacco product, so that a chewing tobacco product containing the capsule was produced.

Five panelists used the chewing tobacco products of each of the examples and the comparative example in their oral cavity, and compared the usability.

The chewing tobacco products containing the capsules of Examples 3 and 5 to 7 could be used by all panelists without any problem. The capsules were destructed by chewing, the capsules had a good cracking sensation, and the panelists could enjoy the aroma of L-menthol, mint, and mango spreading in the mouth. In addition, the film was dissolved quickly in the oral cavity, and there was no uncomfortable feeling in the mouth.

On the other hand, the chewing tobacco product containing the capsule of Comparative Example 2 was dissolved slowly and the capsule film remained uncomfortable feeling in the mouth when the chewing tobacco was used.

### Industrial Applicability

According to the capsule of the present embodiment, a capsule having a large fracture hardness and being excellent in a disintegration property can be obtained, and in particular, the present capsule is suitably used as a capsule that is placed in chewing tobacco.

## Claims

1. A soft capsule used in smokeless tobacco products for oral use,
said soft capsule comprising a capsule film and a content encapsulated by the capsule film, wherein
the fracture hardness measured according to the description is 20 N or more and 200 N or less, and
the disintegration time is less than 5 minutes as measured according to the description by the disintegration test method specified in the Japanese Pharmacopoeia.

2. The capsule according to claim 1, wherein the fracture energy measured according to the description is 25 N·mm or more.

3. The capsule according to claim 1 or 2, wherein the diameter of said capsule is in the range of 2 to 6.5 mm.

4. The capsule according to any one of claims 1 to 3, wherein the film percentage is 7% to 25% by weight.

5. The capsule according to any one of claims 1 to 4, wherein the distortion percentage measured according to the description is 50% or more and 100% or less.

6. The capsule according to any one of claims 1 to 5, wherein the fracture hardness per fracture distance measured according to the description is 4 N/mm or more and 20 N/mm or less.

7. The capsule according to any one of claims 1 to 6, wherein the fracture hardness per capsule diameter measured according to the description is 9 N/mm or more and 20 N/mm or less.

8. The capsule according to any one of claims 1 to 7, wherein the capsule film comprises at least one type selected from the group of gelatin and polysaccharides.

9. The capsule according to claim 8, wherein
the gelatin comprises at least one type selected from the group consisting of pork-derived gelatin, bovine-derived gelatin, and fish-derived gelatin, and
the polysaccharides comprise at least one type selected from the group consisting of galactomannan, agar, carrageenan, and sodium alginate.

10. The capsule according to any one of claims 1 to 9, wherein the capsule film further comprises at least one type of plasticizer selected from the group consisting of polyhydric alcohols, monosaccharides, disaccharides, oligosaccharides, sugar alcohols, starch, starch derivatives, cellulose derivatives, polyvinyl alcohol, and triacetin.

11. The capsule according to any one of claims 1 to 10, wherein the content comprises a flavor.

12. The capsule according to any one of claims 1 to 11, wherein the content comprises caryophyllene.

13. The capsule according to any one of claims 1 to 12, wherein the thickness of the capsule film is 50 to 120 µm.

14. A smokeless tobacco product for oral use, comprising the capsule according to any one of claims 1 to 13.

## Patentansprüche

1. Weichkapsel, die in rauchlosen Tabakerzeugnissen zum oralen Gebrauch verwendet wird,
wobei die Weichkapsel einen Kapselfilm und einen vom Kapselfilm eingekapselten Inhalt umfasst, wobei
die gemäß der Beschreibung gemessene Bruchhärte 20 N oder mehr und 200 N oder weniger beträgt und
die gemäß der Beschreibung nach der in der japanischen Pharmakopöe angegebenen Zerfallstestmethode gemessene Zerfallszeit weniger als 5 Minuten beträgt.

2. Kapsel nach Anspruch 1, wobei die gemäß der Beschreibung gemessene Bruchenergie 25 N·mm oder mehr beträgt.

3. Kapsel nach Anspruch 1 oder 2, wobei der Durchmesser der Kapsel im Bereich von 2 bis 6,5 mm liegt.

4. Kapsel nach einem der Ansprüche 1 bis 3, wobei der Filmprozentsatz 7 bis 25 Gew.-% beträgt.

5. Kapsel nach einem der Ansprüche 1 bis 4, wobei der gemäß der Beschreibung gemessene Verformungsprozentsatz 50 % oder mehr und 100 % oder weniger beträgt.

6. Kapsel nach einem der Ansprüche 1 bis 5, wobei die gemäß der Beschreibung gemessene Bruchhärte pro Bruchabstand 4 N/mm oder mehr und 20 N/mm oder weniger beträgt.

7. Kapsel nach einem der Ansprüche 1 bis 6, wobei die gemäß der Beschreibung gemessene Bruchhärte pro Kapseldurchmesser 9 N/mm oder mehr und 20 N/mm oder weniger beträgt.

8. Kapsel nach einem der Ansprüche 1 bis 7, wobei der Kapselfilm mindestens einen aus der aus Gelatine und Polysacchariden bestehenden Gruppe ausgewählten Typ umfasst.

9. Kapsel nach Anspruch 8, wobei
die Gelatine mindestens einen aus der aus Schweinegelatine, Rindergelatine und Fischgelatine bestehenden Gruppe ausgewählten Typ umfasst und
die Polysaccharide mindestens einen aus der aus Galactomannan, Agar, Carrageen und Natriumalginat bestehenden Gruppe ausgewählten Typ umfassen.

10. Kapsel nach einem der Ansprüche 1 bis 9, wobei der Kapselfilm weiterhin mindestens einen Typ Weichmacher umfasst, ausgewählt aus der aus mehrwertigen Alkoholen, Monosacchariden, Disacchariden, Oligosacchariden, Zuckeralkoholen, Stärke, Stärkederivaten, Cellulosederivaten, Polyvinylalkohol und Triacetin bestehenden Gruppe.

11. Kapsel nach einem der Ansprüche 1 bis 10, wobei der Inhalt ein Aroma umfasst.

12. Kapsel nach einem der Ansprüche 1 bis 11, wobei der Inhalt Caryophyllen umfasst.

13. Kapsel nach einem der Ansprüche 1 bis 12, wobei die Dicke des Kapselfilms 50 bis 120 µm beträgt.

14. Rauchloses Tabakprodukt zum oralen Gebrauch, umfassend die Kapsel nach einem der Ansprüche 1 bis 13.

## Revendications

1. Capsule souple utilisée dans des produits de tabac sans fumée à usage oral,
ladite capsule souple comprenant un film de capsule et un contenu encapsulé par le film de capsule, dans laquelle
la dureté de rupture mesurée selon la description est de 20 N ou plus et de 200 N ou moins, et
le temps de désintégration est inférieur à 5 minutes tel que mesuré selon la description par la méthode du test de désintégration spécifiée dans la Pharmacopée Japonaise.

2. Capsule selon la revendication 1, dans laquelle l'énergie de rupture mesurée selon la description est de 25 N·mm ou plus.

3. Capsule selon la revendication 1 ou 2, dans laquelle le diamètre de ladite capsule est dans la plage de 2 à 6,5 mm.

4. Capsule selon l'une quelconque des revendications 1 à 3, dans laquelle le pourcentage de film est de 7 % à 25 % en poids.

5. Capsule selon l'une quelconque des revendications 1 à 4, dans laquelle le pourcentage de distorsion mesuré selon la description est de 50 % ou plus et de 100 % ou moins.

6. Capsule selon l'une quelconque des revendications 1 à 5, dans laquelle la dureté de rupture par distance de rupture mesurée selon la description est de 4 N/mm ou plus et de 20 N/mm ou moins.

7. Capsule selon l'une quelconque des revendications 1 à 6, dans laquelle la dureté de rupture par diamètre de capsule mesurée selon la description est de 9 N/mm ou plus et de 20 N/mm ou moins.

8. Capsule selon l'une quelconque des revendications 1 à 7, dans laquelle le film de capsule comprend au moins un type choisi dans le groupe de la gélatine et des polysaccharides.

9. Capsule selon la revendication 8, dans laquelle
la gélatine comprend au moins un type choisi dans le groupe constitué par la gélatine dérivée de porc, la gélatine dérivée de bovin et la gélatine dérivée de poisson, et
les polysaccharides comprennent au moins un type choisi dans le groupe constitué par un galactomannane, un agar, un carraghénane et un alginate de sodium.

10. Capsule selon l'une quelconque des revendications 1 à 9, dans laquelle le film de capsule comprend en outre au moins un type de plastifiant choisi dans le groupe constitué par les alcools polyhydriques, les monosaccharides, les disaccharides, les oligosaccharides, les alcools de sucre, l'amidon, les dérivés d'amidon, les dérivés de cellulose, un poly(alcool vinylique) et la triacétine.

11. Capsule selon l'une quelconque des revendications 1 à 10, dans laquelle le contenu comprend un arôme.

12. Capsule selon l'une quelconque des revendications 1 à 11, dans laquelle le contenu comprend du caryophyllène.

13. Capsule selon l'une quelconque des revendications 1 à 12, dans laquelle l'épaisseur du film de capsule est de 50 à 120 µm.

14. Produit de tabac sans fumée à usage oral, comprenant la capsule selon l'une quelconque des revendications 1 à 13.
